# EUROPÄISCHE PATENTANMELDUNG

(11) **EP 1 054 142 A2**
(43) Veröffentlichungstag der Anmeldung: **22.11.2000**
(21) Anmeldenummer: 00110822.4
(22) Anmeldetag: 22.05.2000
(51) Int. Cl.: F02B 43/00, F02B 45/02

(54) **Motor**

(30) Priorität: 21.05.1999 DE 19923346
(71) Anmelder: Dosch, Stefanie, 97337 Dettelbach (DE); Dosch, Günther, 97337 Dettelbach (DE)
(72) Erfinder: Dosch, Stefanie, 97337 Dettelbach (DE); Dosch, Günther, 97337 Dettelbach (DE)
(74) Vertreter: Küchler, Stefan

(57) **Zusammenfassung**

Die Erfindung richtet sich einerseits auf einen Motor mit wenigstens einem Zylinder, in dessen Verbrennungsraum ein Kolben beweglich aufgenommen ist, der ein in den Verbrennungsraum gesaugtes oder geladenes Kraftstoff-Luft-Gemisch komprimiert und bei Zündung desselben durch den sodann erhöhten Druck in Bewegung versetzt wird, wobei der Verbrennungsraum mit einer Druckspeicherkammer verbindbar ist, die taktweise bei der Verbrennungsexplosion Verbrennungsgas aus dem Zylinder aufnimmt und speichert und dieses vor bzw. zu der nächsten Verbrennungsexplosion wieder in den Verbrennungsraum abgibt, mit einer Vorrichtung zur Aufbereitung des mit dem Verbrennungsgas vermischten oder zu vermischenden Kraftstoffs außerhalb des Verbrennungsraums unter Energiezufuhr, derart, dass dieser in einen dampf- oder gasförmigen und/oder ionisierten Zustand überführt wird; sowie andererseits auf ein Verfahren zum Betrieb eines derartigen Verbrennungsmotors, wobei ein Teil des verdichteten Kraftstoff-Luft-Gemischs vor oder zu Beginn der Verbrennung in die Druckspeicherkammer übergeleitet wird, mit zusätzlichem Kraftstoff und/oder zusätzlicher Luft vermischt wird und vor oder zu Beginn der nächsten Verbrennung wieder in den Verbrennungsraum geleitet wird, und wobei in der Speicherphase eine Aufbereitung des Kraftstoffs unter Energiezufuhr erfolgt, derart, dass dieser in einen dampf- oder gasförmigen und/oder ionisierten Zustand überführt wird.

## Beschreibung

Die Erfindung richtet sich einerseits auf einen Motor mit wenigstens einem Zylinder, in dessen Verbrennungsraum ein Kolben beweglich aufgenommen ist, der ein in den Verbrennungsraum gesaugtes oder geladenes Kraftstoff-Luft-Gemisch komprimiert und bei Zündung desselben durch den sodann erhöhten Druck in Bewegung versetzt wird, wobei der Verbrennungsraum mit einer Druckspeicherkammer verbindbar ist, die taktweise bei der Verbrennungsexplosion Verbrennungsgas aus dem Zylinder aufnimmt und speichert und dieses vor bzw. zu der nächsten Verbrennungsexplosion wieder in den Verbrennungsraum abgibt; sowie andererseits auf ein Verfahren zum Betrieb eines derartigen Verbrennungsmotors, wobei ein Teil des verdichteten Kraftstoff-Luft-Gemischs vor oder zu Beginn der Verbrennung in die Druckspeicherkammer übergeleitet wird, mit zusätzlichem Kraftstoff und/oder zusätzlicher Luft vermischt wird und vor oder zu Beginn der nächsten Verbrennung wieder in den Verbrennungsraum geleitet wird.

Die Erfindung betrifft einen Verbrennungs- oder Explosionsmotor, der als Treibstoff vorzugsweise schwer oder schwerst entflammbare Stoffe verbrennt wie mineralische Öle und Produkte, pflanzliche Öle und Fette sowie tierische Öle und Fette und deren Gemische, Alkohol usw. ohne daß die Erfindung hierauf beschränkt ist. Diesen Treibstoffen können beispielsweise auch Zusatzstoffe wie Wasser beigemischt sein. Die Erfindung ist aber grundsätzlich auch auf leicht entzündliche Treibstoffe sowie beispielsweise auf verflüssigte Gase anwendbar. In ihrer weitesten Form betrifft die Erfindung allgemein eine Krafterzeugungsanlage, die auch mit festen Brennstoffen wie z. B. Kohlenstaub betrieben werden kann.

Ein Problem bei herkömmlichen Verbrennungsmotoren ist, dass meist nur gasförmige oder flüssige und überdies leicht entflammbare Substanzen verwendet werden können. Dies liegt daran, daß bei den bisher bekannten Verbrennungsmotoren nur eine unzureichende Aufbereitung der Treibstoffe vor dem eigentlichen Verbrennungsvorgang erfolgt. Es ist beispielsweise bekannt, Diesel-Kraftstoff mit sehr hohem Druck gegen eine in den Verbrennungsraum ragende glühende Fläche zu spritzen, wobei der Dieselkraftstoff schlagartig verdampft. Damit wird der Dieselkraftstoff zwar in einen nun leicht entzündlichen Zustand versetzt, aber die Vermischung mit der in dem Verbrennungsraum befindlichen Frischluft erfolgt nur unzureichend, was zu einer unvollständigen Verbrennung fürht.

Der vorliegenden Erfindung liegt die Problemstellung zugrunde, einen Motor oder allgemein eine Verbrennungskraftmaschinederart zu optimieren, dass eine bessere Aufbereitung des Treibstoffes und eine intensivere bzw. schnellere Verbrennung erfolgt.

Dieses Problem wird erfindungsgemäß durch die Merkmale der nebengeordneten Ansprüche gelöst.

Es hat sich als günstig erwiesen, dass in der Speicherphase eine Aufbereitung des Kraftstoffs unter Energiezufuhr erfolgt, derart, dass dieser in einen dampf- oder gasförmigen und/oder ionisierten Zustand überführt wird. Diese Aufbereitung kann vor oder nach der Vermischung mit den gespeicherten Verbrennungsgasen stattfinden. In ersterem Fall kann der Kraftstoff getrennt vorbereitet werden, und sodann kann der Druck der gespeicherten Verbrennungsgase genutzt werden, um den Kraftstoff ggf. unter gleichzeitiger Verwirbelung in den Verbrennungsraum hineinzuspülen. In letzterem Fall werden die erhitzten Verbrennungsgase bereits zu einer Erwärmung des Kraftstoffs verwendet, so dass die erforderliche, von außen zuzuführende Aktivierungsenergie herabgesetzt ist. Im Rahmen der Erfindung wird somit der bei einer Verbrennungs-Explosion entstandene höchste Druck und die Wärme in geeigneter Menge gespeichert, und diese Energie versetzt die für den nächsten Verbrennungstakt bestimmte Treibstoffmenge in einen leicht entflammbaren Aggregatzustand und/oder sorgt für eine optimale Vermischung mit der Frischluft im Brennraum des Zylinders. Dabei hängen die Größe des notwenidgen Speichervolumens bzw. die bevorzugte Form eines hierzu und/oder zur Aufbereitung verwendeten Raums von den jeweiligen Gegebenheiten des Motors ab, beispielsweise von der Größe des ßrennraums und dem verwendeten Treibstoff.

Die Aufbereitung des Kraftstoffs kann durch Druckerzeugung; Wärmeeinwirkung; Elektrizität, insbesondere Hochspannung, zwecks Ionisierung erfolgen; ferner durch optische, energiereiche Wellen wie Laserstrahlen; durch hochfrequente, energiereiche Wellen, insbesondere Mikrowellen; und durch Strahlen, bspw. Infrarotstrahlen; durch Magnetfelder aller Art; ferner durch akustische Anregung bspw. mit Ultraschall. Die Energie kann jeweils gleichmäßig oder pulsierend oder schockartig eingesetzt werden, um den Kraftstoff in einen optimalen Aufbereitungszustand zu versetzen.

Dies kann nach einem weiteren Vorschlag der Erfindung noch dadurch gefördert werden, daß der in die Aufbereitungskammer eingebrachte Treibstoff z. B. elektromagnetisch positiv aufgeladen wird, während die in den Brennraum eingeführte Frischluft bzw. deren Sauerstoff- und/oder Wasseranteil negativ geladen wird oder umgekehrt was dazu führt, daß sich positiv und negativ geladene Teile anziehen und/oder gar aneinander binden mit dem Ergebnis einer optimalen Verbrennung. Analog ist dieser Vorgang mit weiteren Stoffen und Medien vollziehbar, bspw. Wasserdampf, welche nun positiv oder negativ geladen oder sonstwie beeinflußt werden.

Wie oben bereits erwähnt, ist gemäß der vorliegenden Erfindung die für die Aufbereitung des Treibstoffs zur Verfügung stehende Zeitspanne erheblich verlängert, wenn der die Aufbereitungseinrichtung enthaltende Raum über ein vorzugsweise steuerbares Ventil mit dem Brennraum (und über ein weiteres Ventil mit der Druckspeicherkammer) verbindbar ist, das nur zum Ausstoßen des aufbereiteten Treibstoffgemischs in die Brennkammer kurz geöffnet, ansonsten aber nahezu über die gesamte Zeitspanne der vier Arbeitstakte eines Vier-Takt-Motors geschlossen ist. Diese lange Aufbereitungszeit ermöglicht es, daß auch feste Brennstoffe so aufbereitet werden, daß hierdurch eine Kraftmaschine betrieben werden kann, was ebenfalls im Rahmen der Erfindung liegt. Als feste Brennstoffe kommen beispielsweise Kohlenstaub und andere geeignete Stoffe in Betracht, die auch cremeförmig oder pastenförmig oder wie auch immer, etwa als Gemische mit anderen, geeigneten Stoffen in die Aufbereitungskammer eingebracht werden können. Es kann beispielsweise auch granulierter Kohlenstaub oder stangengepreßter Kohlenstaub in die Aufbereitungskammer eingebracht werden, wo ähnlich wie beim bekannten Betrieb von Feststoffraketen ein erfindungsgemäßer Abbrand erfolgt. Anstelle des bei flüssigen Kraftstoffen üblichen Einspritzpumpen-/Einspritzdüsen-Systems können bei festen Brennstoffen oder Treibstoffen beispielsweise auch Extruder mit geregeltem Vorschub eingesetzt werden.

Der aufbereitete Kraftstoff wird durch die einströmende Druckwelle des gespeicherten Verbrennungsgases zunächst in der Aufbereitungskammer verwirbelt und damit weitestgehend gleichmäßig verteilt, was dadurch gefördert wird, daß das gespeicherte Verbrennungsgas an der oberen Wand der Aufbereitungskammer eingeführt wird und vorzugsweise in einer kreisenden, zyklonartigen Bewegung der unteren Durchlaßöffnung zum Verbrennungsraum zustrebt, wobei dies durch spiralförmige Vertiefungen in der Aufbereitungskammerwand und/oder durch Leitprofile/Führungsprofile verstärkt werden kann. Hierdurch wird eine wirbelnde und innige Vermischung der Stoffe in der Aufbereitungskammer hervorgerufen, so daß sich beispielsweise auch ansonsten kaum vermischbare Stoffe wie z. B. Wasser und Öl zusammen mit sauerstoffhaltiger Luft zu einem explosiven Gemisch aufbereiten lassen.

Die Entladung der bevorzugt wärmeisolierten Druckspeicherkammer, in der das gespeicherte Verbrennungsgas einen Druck von etwa 300 bis 1200 bar und eine Temperatur von bis zu etwa 350° C haben kann, preßt den kreisenden, aufbereiteten Treibstoff in die beispielsweise mit ca. 30 bis 35 bar komprimierte Frischluft der Brennkammer und ruft dort eine nahezu 100%ige Vermischung hervor.

Gemäß der vorliegenden Erfindung ist eine Druckspeicherkammer vorgesehen, die mit dem Verbrennungsraum verbindbar ist und taktweise bei der Verbrennungsexplosion unter sehr hohem Druck stehendes und heißes Verbrennungsgas speichert und die vor der nächsten Verbrennungsexplosion dieses Verbrennungsgas wieder abgibt.

Dabei kann die Druckspeicherkammer direkt mit dem Verbrennungsraum über ein Einlaßventil und ein Auslaßventil verbunden sein. Das Einlaßventil kann beispielsweise ein federbelastetes Kugelventil sein, das öffnet so lange der Druck in dem Verbrennungsraum denjenigen in der Druckspeicherkammer übersteigt. Vor der nächsten Verbrennungsexplosion kann dann durch ein taktweise geöffnetes und vorzugsweise aktiv, insbesondere abhängig vom Kurbelwellenstellungswinkel steuerbares Auslaßventil das unter hohem Druck stehende, heiße Verbrennungsgas wieder in den Verbrennungsraum eingeführt werden, in dem auf geeignete Weise, beispielsweise durch eine Einspritzdüse oder einen Vergaser o. ä. der Kraftstoff eingebracht ist oder wird und dort z. B. auf die oben erwähnte glühende Fläche trifft. Das unter hohem Druck und Hitze in den Verbrennungsraum eintretende gespeicherte Verbrennungsgas verwirbelt dabei den Kraftstoffnebel oder den gasförmigen Kraftstoff und vermischt diesen hochgradig mit der Frischluft in dem Verbrennungsraum. Hierzu kann das Verbrennungsgas z. B. spiralförmig in dem Verbrennungsraum geführt werden, so daß es dort die hochgradige Verwirbelung hervorruft.

Das Öffnen des Auslaßventils erfolgt in Relation zur Einbringung des Kraftstoffs zum optimalen Zeitpunkt.

Mit besonderem Vorteil wird weiterhin vorgeschlagen, daß eine Kraftstoffaufbereitungskammer mit dem Verbrennungsraum in Verbindung steht oder verbindbar ist, die ihrerseits mit der Druckspeicherkammer verbindbar ist. Bei dieser Ausgestaltung der Erfindung wird der Kraftstoff in die Aufbereitungskammer eingebracht und dort durch geeignete Mittel, auf die weiter unten noch eingegangen wird, in einen leicht entflammbaren Zustand versetzt, d.h. z.B. vernebelt oder verdampft. Aus dieser Aufbereitungskammer wird der Kraftstoff dann durch das an geeigneter Stelle in die Aufbereitungskammer eintretende gespeicherte Verbrennungsgas des vorangegangenen Verbrennungsvorgangs in den Verbrennungsraum 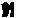 gespült", wobei das Kraftstoffnebel-/Kraftstoffgas-/Verbrennungsgas-Gemisch mit großem Druck in den Verbrennungsraum gepreßt wird und sich dort wirkungsvoll mit der Frischluft vermischt.

In näheren Einzelheiten wird vorgeschlagen, daß die Druckspeicherkammer mittels eines Einwegventils direkt mit der Brennkammer verbunden ist und mit der Aufbereitungskammer über ein weiteres Ventil in Verbindung steht. Die Aufbereitungskammer ist ihrerseits gegenüber dem Brennraum durch ein Ventil abgetrennt, das so gesteuert wird, daß sich die Treibstoffaufbereitungskammer nur zu einem vorbestimmten Zeitpunkt zur Brennkammer hin öffnet, nämlich ungefähr/etwa/vorzugsweise dann, wenn der Kolben die Frischluft in dem Brennraum am oberen Wendepunkt (0-Punkt) optimal verdichtet hat. Zu diesem Zeitpunkt wird durch gleichzeitiges oder vorheriges Öffnen des Ventils zwischen der Druckspeicherkammer und der Aufbereitungskammer sowie des Ventils zwischen der Aufbereitungskammer und dem Brennraum der aufbereitete Kraftstoff in den Brennraum eingepreßt Diese Ausbildung hat den Vorteil, daß in der übrigen Zeit die Aufbereitungskammer sowohl gegenüber dem Brennraum als auch gegenüber der Druckspeicherkammer hin abgeschlossen ist, so daß die Treibstoffaufbereitung unabhängig von den weiteren Abläufen im Zylinder über einen sehr viel längeren Zeitraum als bisher erfolgen kann.

Weiter wird mit großem Vorteil vorgeschlagen, daß die Aufbereitungskammer aus wenigstens zwei Gehäuseteilen besteht, beispielsweise einem im wesentlichen zylindrischen oder kegelstumpfförmigen Gehäuseteil und einem damit verschraubten Deckel, wodurch die Aufbereitungskammer bequem zugänglich ist, um die für den jeweils verwendeten Kraftstoff (oder das Kraftstoffgemisch) optimale Aufbereitungseinrichtung in diese Aufbereitungskammer einbauen zu können. Das Gehäuse der Aufbereitungskammer kann dabei in den Zylinderkopf eingeschraubt oder auf andere Weise befestigt sein, beispielsweise an der Stelle, die bisher zum Einschrauben einer Glühkerze oder vorzugsweise Einspritzdüse vorgesehen ist. Die Einspritzdüse injiziert dann in die Aufbereitungskammer.

Die Aufbereitungseinrichtung ist aktiv betrieben, d.h., wird von einer vorzugsweise elektrischen Energiequelle gespeist, um durch Zuführung von Energie den Kraftstoff in einen dampf- oder gasförmigen und/oder ionisierten Zustand zu versetzen.

Die Druckspeicherkammer und die Treibstoffaufbereitungskammer können nicht nur bei der Herstellung eines neuen Motors montiert bzw. vorgesehen werden, sondern auch bereits gefertigte und/oder im Betrieb befindliche Motoren können nachträglich mit diesen beiden Kammern ausgerüstet werden, indem beispielsweise die Aufbereitungskammer anstelle einer zuvor entfernten Einspritzdüse in den Zylinderkopf des Motors eingeschraubt wird.

Die Erfindung ermöglicht es auch, daß im Verbrennungsraum die bisher den Start des Motors ermöglichende Glühkerze entfallen kann. Wenn der Motor bei tiefen Minustemperaturen oder nach langem Stillstand gestartet werden soll, kann dies statt mit Hilfe einer herkömmlichen Glühkerze durch eine erfindungsgemäße Vorrichtung erfolgen, die durch Einbringen eines leicht entzündbaren Mediums den Startvorgang ermöglicht bzw. diesen unterstützt.

Außerdem ermöglicht die Erfindung die Verbrennung von schwer entflammbaren Kraftstoffen in Kleinmotoren, insbesondere auch in solchen mit nur ca. 50 cm³ Hubraum, was bei herkömmlichen Motoren bisher nicht möglich ist.

Die Erfindung kann praktisch jeden Verbrennungsmotor zu einem sparsamen Viel-Stoff-Motor machen. Durch die optimale Aufbereitung des Treibstoffs oder Treibstoffgemischs wird eine bestmögliche Verbrennung erzielt, was zu einer Treibstoffeinsparung mit geringerer Umweltbelastung durch weniger Abgase, zu einer Verschleißminderung des Motors und zu dessen verlängerter Lebensdauer führt.

Außerdem kann mit Vorteil vorgesehen sein, dass durch eine entsprechende Anordnung von Kanälen, Leitungen und Ventilen je eine Druckspeicherkammer und je eine Kraftstoffaufbereitungskammer zwei oder mehr Zylindern zugeordnet sind und diese erfindungsgemäß betreiben.

Weitere Einzelheiten der Erfindung ergeben sich aus der nachfolgenden Beschreibung einiger Ausführungsformen sowie anhand der Zeichnung. Dabei zeigen auf rein schematische Weise:
- Fig. 1: eine erste Ausführungsform der Erfindung;
- Fig. 2: eine weitem Ausführungsform der Erfindung;
- Fig. 3: eine wiederum abgewandelte Ausführungsform der Erfindung;
- Fig. 4: ein Auslaßventil der Druckspeicherkammer;
- Fig. 5: eine vierte Ausführungsform der Erfindung und
- Fig. 6: eine Variation der Ausführungsform gemäß Fig. 5.

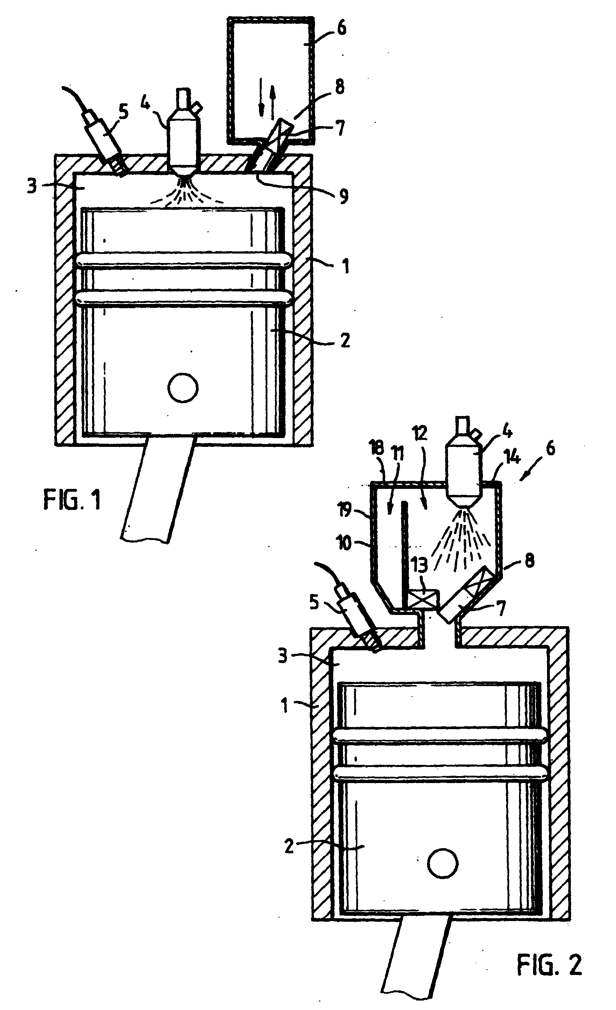

Fig. 1 zeigt rein schematisch einen Zylinder 1 mit einem Kolben 2, über dem der Motorbrennraum 3 liegt, in den eine Einspritzdüse 4 und eine Glühkerze 5 hineinragen.

Mit dem Motorbrennraum 3 steht eine Druckspeicherkammer 6 über ein Einlaß/Auslaßventil 7 mit einem Ventilantrieb 8 in Verbindung. Es können auch getrennte Einlaß- und Auslaßventile vorgesehen sein.

Die Druckspeicherkammer 6 kann beispielsweise in eine Gewindebohrung in den Zylinderkopf eingeschraubt sein, ohne dass die Erfindung hierauf beschränkt ist.

Bei dem Verbrennungsvorgang bzw. der Verbrennungsexplosion wird erfindungsgemäß ein Teil der Energie in dem Druckspeicher 6 gespeichert, um nachfolgend weitgehend verlustlos wieder dem Brennraum zugeführt zu weiden und die Leistungsfähigkeit des Motors zu erhöhen. Das gespeicherte Verbrennungsgas kann dabei einen Druck von weit über 1000 bar und eine Temperatur von über 350° C haben.

Diese Druckspeicherkammer ist zur Erhöhung des Wirkungsgrades nicht nur bei Verbrennungs- und Explosionsmotoren, die nach dem Otto- oder Dieselprinzip arbeiten, sondern auch bei anderen Kraftanlagen mit steigenden/fallenden oder veränderlichen, pulsierenden Drücken anwendbar.

Die Mündung 9 des Auslaßventils 7 in den Motorbrennraum 3 ist so angeordnet, dass das austretende Hochdruckgas an der Innenwand des Motorbrennraums entlang geführt und dadurch in eine kreisende Bewegung versetzt wird, wobei es spiralförmig den Motorbrennraum 3 einnimmt und sich dort optimal mit dem eingespritzten Treibstoff und der Frischluft verwirbelt und vermischt. Hierdurch wird der Verbrennungsgrad maximiert.

Bei der in Fig. 2 rein schematisch dargestellten Ausführungsform führt die Einspritzdüse 4 nicht durch den Zylinderkopf in den Motorbrennraum 3, sondern in die Druckspeicherkammer 6. Diese ist durch eine Trennwand 10 in eine kleinere Kammer 11, die beispielsweise ein Drittel des Gesamtraums der Druckspeicherkammer 6 ausmachen kann, und eine größere Kammer 12 unterteilt, in die die Einspritzdüse 4 Treibstoff, mit dem erforderlichen Druck, beispielsweise mit einem Einpreßdruck von über 1000 bar, vorzugsweise von 1200 bis 2000 bar, einspritzt.

In der Einlaßöffnung zu der Druckspeicherkammer kann beispielsweise ein Druckminderungsventil 13 sitzen, das die Wirkung hat, dass das in der Kammer 6 gespeicherte Verbrennungsgas nicht mit dem Explosionsdruck, sondern mit einem verringerten Druck, vorzugsweise von etwa 300 bis 500 bar gespeichert wird. Der Druck in der Kammer und der Treibstoffeinspritzdruck müssen immer in geeigneter Relation zueinander stehen.

Bei dieser Ausgestaltung der Erfindung vermischt sich das durch die Einspritzdüse 4 eingebrachte Treibmittel nur mit einem Teil des gesamten Rauminhalts der Druckspeicherkammer 6, vorzugsweise mit etwa 2/3 des Rauminhalts der durch die Trennwand 10 von der Kammer 11 abgeschirmten Kammer 12. Zwischen den beiden Kammern 11 und 12 kann im oberen Bereich ein Auslaßventil angeordnet sein, wobei auch ein stets offener Durchlaß vorgesehen sein kann, indem die Trennwand unterhalb des Deckels 14 der Druckspeicherkammer 6 endet, wie dies in Fig. 2 angedeutet ist.

Bei dieser Ausführungsform der Erfindung spült das gespeicherte Verbrennungsgas der Kammer 11 das Kraftstoff/Verbrennungsgas-Gemisch der Kammer 12 vollständig in den Motorbrennraum 3, wenn das Auslaßventil 7 geöffnet wird.

Bei dieser Ausführungsform kann die Druckspeicherkammer 6 den Platz der Einspritzdüse einer herkömmlichen Anordnung einnehmen, wobei alle anderen Komponenten des Motors in ihren Funktionen vorzugsweise erhalten bleiben könnten. Eine vorzeitige Zündung bzw. Explosion des Treibstoffs in der Druckspeicherkammer 6 ist wegen des fehlenden Sauerstoffs nicht möglich.

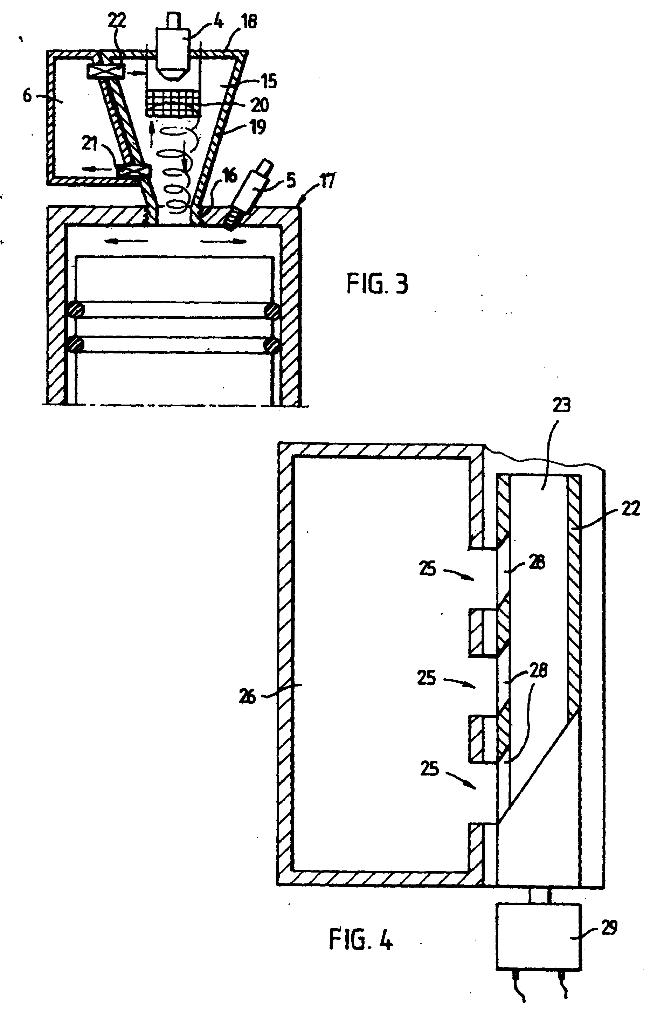

Es wird nur auf Fig. 3 Bezug genommen, die auf rein schematische Weise eine Ausführungsform darstellt, bei der schwer brennbare Stoffe wie z. B. pflanzliche und tierische Fette und Öle als Treibstoff verwendet werden können. Diese Ausführungsform hat eine Treibstoff-Aufbereitungskammer 15, die beispielsweise die Form eines Kegelstumpfs haben kann und bevorzugt in eine Gewindebohrung im Zylinderkopf 17 eingeschraubt ist. Die Aufbereitungskammer 15 besteht aus zwei Teilen, nämlich einem Deckel 18, der mit dem Kammergehäuse 19 verschraubt ist, wodurch der Innenraum der Aufbereitungskammer 15 gut zugänglich ist.

Dies ermöglicht es, eine oder mehrere Treibstoffaufbereitungseinrichtungen 20, beispielsweise eine Verdampfungseinrichtung in die Aufbereitungskammer 15 einzubauen. Auf den Einflussbereich dieser Aufbereitungseinrichtung 20 trifft der Treibstoff bzw. Brennstoff, der aus der Einspeisungsvorrichtung in die Aufbereitungskammer mit geeignetem Druck eingebracht wird.

Mit der Aufbereitungskammer 15 ist eine getrennte Druckspeicherkammer 6 durch ein Einlaßventil 21 und ein Auslaßventil 22 verbunden. Das mit hohem Druck in der Kammer 6 gespeicherte Verbrennungsgas tritt an der oberen Wand der Aufbereitungskammer 15 ein und spült in einer spiralförmigen Bewegung den Treibstoffdampf bzw. Nebel in den Motorbrennraum.

Fig. 4 zeigt - wiederum rein schematisch - ein röhrenförmiges Ventil 22 aus einem hochdruckfesten, hitzebeständigen Material, vorzugsweise aus Keramik oder Metallegierungen, wobei auch eine Beschichtung beispielsweise aus Teflon möglich ist. Dieses Ventil 22 ist mit einem Antrieb 29 verbunden, das es taktweise zum Öffnen und Schließen dreht was den Vorteil hat, dass das Ventil 22 auch unter hohem Druck leicht betätigbar ist.

Die Röhre 23 ist mit mehreren Schlitzen 28 versehen, die in der Öffnungsstellen mit Wandöffnungen 25 der Druckspeicherkammer 26 fluchten. Die Röhre sitzt in einem Ventilsitz, der die für die Funktion der Schlitze 28 notwendige Fläche offen lässt Durch entsprechende Formgebung und Anordnung der Schlitze ist sowohl eine Feinregulierung als auch eine augenblickliche Stoßentleerung des unter hohem Druck stehenden Verbrennungsgases in der Druckspeicherkammer 26 möglich. Ein geeigneter Dralt in der Röhreninnenwand und in der Mündungsöffnung kann das durchfließende Medium in eine um die Fließachse drehende Bewegung versetzen. Das Röhrenventil kann auf mechanische, elektromagnetische oder auch elektromotorische Weise sowie durch Preßluft, Öldruck etc. betätigt werden. Dieses Röhrenventil ist für die Entleerung der Druckspeicherkammer bestens geeignet.

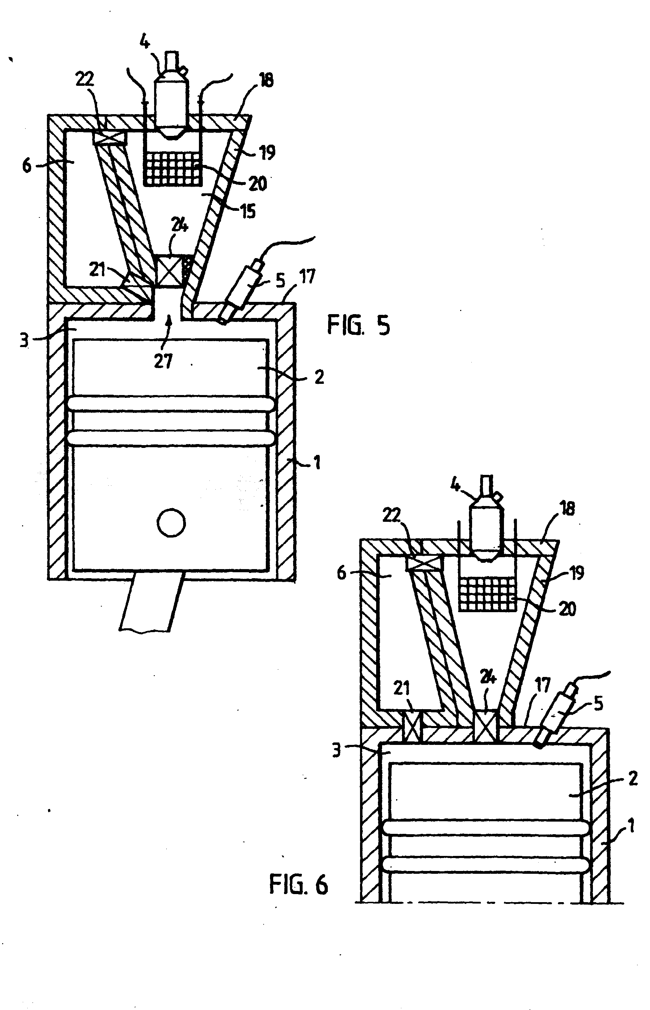

Fig. 5 zeigt eine wesentliche Modifikation der Ausführungsform gemäß Fig. 3. Wenn der Kolben 2 sich beim Verdichtungstakt nach oben bewegt, wird die Frischluft in dem Brennraum 3 zunehmend verdichtet. Wenn dabei - wie dies bei der Ausführungsform gemäß Fig. 3 der Fall ist - der Zugang von dem Brennraum 3 zur Aufbereitungskammer 15 offen ist (da kein Verschlußelement vorgesehen ist), verringert dies die Verdichtung der Frischluft entsprechend dem Volumen der Aufbereitungskammer.

Um die Frischluft höher komprimieren zu können, ist bei der Ausführungsform gemäß Fig. 5 daher vorgesehen, dass zwischen der Aufbereitungskammer 15 und dem Brennraum 3 ein Ventil 24 angeordnet ist, das so gesteuert wird, dass sich die Treibstoffaufbereitungskammer 15 nur zu einem exakt vorbestimmten Zeitpunkt zur Brennkammer 3 hin öffnet, vorzugsweise dann, wenn der Kolben 2 die Frischluft In dem Brennraum 3 am oberen Arbeitspunkt (0-Punkt) optimal verdichtet hat. Im wesentlichen gleichzeitig und/oder zu einem geeigneten, erfindungsgemäßen Zeitpunkt, etwa zur Optimierung der Brennstoffaufbereitung schon zu einem anderen, auch früheren Zeitpunkt, wird das Ventil 22 zwischen der Druckspeicherkammer 6 und der Aufbereitungskammer 15 geöffnet, wodurch der aufbereitete Kraftstoff aus der Aufbereitungskammer 15 ausgestoßen wird.

Die Druckspeicherkammer 6 ist über ein Einwegventil 21 direkt mit der Brennkammer 3 verbunden, wobei sie in dieselbe Durchgangsbohrung 27 durch die obere Zylinderwand einmündet wie das Ventil 24.

Bei der Ausführungsform der Fig. 6 sitzt das Ventil 21 in einer getrennten Durchgangsbohrung durch die obere Zylinderwand im seitlichen Abstand neben dem Ventil 24.

## Patentansprüche

1. Verfahren zum Betrieb eines Verbrennungsmotors mit wenigstens einem Zylinder, in dessen Verbrennungsraum (3) ein Kolben beweglich aufgenommen ist, der ein in den Verbrennungsraum gesaugtes oder geladenes Kraftstoff-Luft-Gemisch komprimiert und bei Zündung desselben durch den sodann erhöhten Druck in Bewegung versetzt wird, wobei ein Teil des verdichteten Kraftstoff-Luft-Gemischs vor oder zu Beginn der Verbrennung in eine Druckspeicherkammer (6) übergeleitet wird, dort gespeichert bleibt und mit zusätzlichem Kraftstoff und/oder zusätzlicher Luft vermischt wird und vor oder zu Beginn der nächsten Verbrennung wieder in den Verbrennungsraum (3) geleitet wird, dadurch gekennzeichnet, dass in der Speicherphase eine Aufbereitung des Kraftstoffs unter Energiezufuhr erfolgt, derart, dass dieser in einen dampf- oder gasförmigen und/oder ionisierten Zustand überführt wird.

2. Verfahren nach Anspruch 1, dadurch gekennzeichnet, dass das Verbrennungsgas aus der Druckspeicherkammer (6) zunächst in eine weitere Kammer geleitet wird, wo die Aufbereitung des Kraftstoffs erfolgt.

3. Verfahren nach Anspruch 2, dadurch gekennzeichnet, dass das Verbrennungsgas aus der Druckspeicherkammer (6) etwa tangential entlang der Innenwand in die Kraftstoffaufbereitungskammer (15) eingeleitet wird.

4. Verfahren nach einem der Ansprüche 1 bis 3, dadurch gekennzeichnet, dass die Kraftstoffmoleküle und die Luftmoleküle mit entgegengesetzter Polarität ionisiert bzw. aufgeladen werden

5. Motor zur Durchführung des Verfahrens nach einem der vorhergehenden Ansprüche, umfassend wenigstens einen Zylinder, in dessen Verbrennungsraum (3) ein Kolben beweglich aufgenommen ist, der ein in den Verbrennungsraum gesaugtes oder geladenes Kraftstoff-Luft-Gemisch komprimiert und bei Zündung desselben durch den sodann erhöhten Druck in Bewegung vernetzt wird, wobei der Verbrennungsraum (3) mit einer Druckspeicherkammer (6) verbindbar ist, die taktweise bei der Verbrennungsexplosion Verbrennungsgas aus dem Zylinder aufnimmt und speichert und dieses vor bzw. zu der nächsten Verbrennungsexplosion wieder in den Verbrennungsraum (3) abgibt, gekennzeichnet durch eine Vorrichtung zur Aufbereitung des mit dem Verbrennungsgas vermischten oder zu vermischenden Kraftstoffs außerhalb des Verbrennungsraums unter Energiezufuhr, derart, dass dieser in einen dampf- oder gasförmigen und/oder ionisierten Zustand überführt wird.

6. Motor nach Anspruch 5, dadurch gekennzeichnet, dass die Druckspeicherkammer (6) wärmeisoliert ist.

7. Motor nach Anspruch 5 oder 6, dadurch gekennzeichnet dass die Druckspeicherkammer über ein Ventil (21), vorzugsweise ein Überdruckventil, mit dem Verbrennungsraum (3) des Zylinders verbindbar ist.

8. Motor nach einem der Ansprüche 5 bis 7, dadurch gekennzeichnet, dass die Aufbereitungsvorrichtung in der Druckspeicherkammer oder in einem von dieser durch eine Barriere sowie ggf. ein Ventil getrennten Raum angeordnet ist.

9. Motor nach Anspruch 8, dadurch gekennzeichnet, dass in der Innenwand der Kraftstoffaufbereitungskammer (15) spiralförmige Vertiefungen bzw. Erhöhungen vorgesehen sind, die zur Austrittsöffnung zum Verbrennungsraum (3) führen.

10. Motor nach Anspruch 8 oder 9, dadurch gekennzeichnet, dass die Kraftstoffaufbereitungskammer (15) mittels eines Ventils gegenüber dem Verbrennungsraum absperrbar ist.
